# EUROPÄISCHE PATENTSCHRIFT

(11) **EP 3 323 116 B1**
(45) Veröffentlichungstag und Bekanntmachung des Hinweises auf die Patenterteilung: **27.01.2021**
(21) Anmeldenummer: 16741257.6
(22) Anmeldetag: 04.07.2016
(51) Int. Cl.: G08B 13/16, G05D 1/02, G08B 29/18

(54) **VERFAHREN ZUM BETRIEB EINES FLÄCHENBEARBEITUNGSGERÄTES**
METHOD FOR OPERATING A SURFACE TREATMENT DEVICE
PROCÉDÉ DE FONCTIONNEMENT D'UN APPAREIL DE TRAITEMENT DE SURFACES

(30) Priorität: 14.07.2015 DE 102015111392
(43) Veröffentlichungstag der Anmeldung: 23.05.2018
(73) Patentinhaber: Vorwerk & Co. Interholding GmbH, 42275 Wuppertal (DE)
(72) Erfinder: MEYER, Frank, 58640 Iserlohn (DE)
(74) Vertreter: Müller, Enno
(86) Internationale Anmeldenummer: PCT/EP2016/065690
(87) Internationale Veröffentlichungsnummer: WO 2017/009083

(56) Entgegenhaltungen:
- EP-A1- 2 423 893
- WO-A1-93/10513
- CN-A- 103 142 188
- JP-A- 2001 253 319
- US-A- 5 742 232
- US-A1- 2005 237 189

## Beschreibung

### Gebiet der Technik

Die Erfindung betrifft ein Verfahren zum Betrieb eines selbsttätig verfahrbaren Flächenbearbeitungsgerätes, insbesondere eines Saug- und/oder Wischroboters, wobei das Flächenbearbeitungsgerät in einem Raum verfahren kann und hierbei gegebenenfalls Flächenbearbeitungsaufgaben ausführt, und wobei ein Ultraschallsensor Ultraschall, insbesondere an Hindernissen reflektierte Ultraschallwellen, detektiert.

Des Weiteren betrifft die Erfindung ebenso ein selbsttätig verfahrbares Flächenbearbeitungsgerät mit einem Ultraschallsensor sowie ein System aus einem selbsttätig verfahrbaren Flächenbearbeitungsgerät aufweisend einen Ultraschallsensor und einer Hausalarmanlage, in welche das Flächenbearbeitungsgerät kommunikationstechnisch integriert ist.

### Stand der Technik

Verfahren zum Betrieb eines solchen Flächenbearbeitungsgerätes sind im Stand der Technik hinreichend bekannt. Dabei kann das Flächenbearbeitungsgerät, insbesondere ein Saug- und/oder Wischroboter, beispielsweise anhand einer gespeicherten Raumkarte innerhalb eines Raums und/oder einer Wohnung hin- und herfahren und vorzugsweise Reinigungsaufgaben ausführen. Es ist ebenfalls bekannt, solche Flächenbearbeitungsgeräte, welche vorrangig Reinigungsaufgaben dienen, zusätzlich mit weiteren Funktionen auszustatten, beispielsweise zur Überwachung eines Raumes in Bezug auf einen unbefugten Zutritt einer Person.

Die Druckschrift EP 2 423 893 B1 offenbart beispielsweise ein selbsttätig verfahrbares Reinigungsgerät, welches Gegenstände mittels einer Sensorik erfasst, wobei eines oder mehrere Umgebungsmerkmale zumindest in einem bestimmten, vorgegebenen Zeitraum erfasst werden und bei einer Änderung einer Anordnung eines Gegenstandes oder einem unbefugten Zutritt einer Person ein Alarm ausgelöst wird. Die Änderung der Anordnung eines Gegenstandes und/oder die Anwesenheit eines neuen Gegenstandes bzw. einer Person wird mittels einer Abstandsmesseinrichtung und/oder mittels eines Hindernissensors detektiert, indem eine hinterlegte Referenzkarte des Raumes mit einer aktuell gemessenen Raumsituation verglichen wird.

Es soll nun ein Verfahren geschaffen werden, mit welchem auf andere Art und Weise ein unberechtigter Zutritt, insbesondere ein Einbruch, festgestellt werden kann. Dies gegebenenfalls auch ohne den Vergleich von Raumkarten.

### Zusammenfassung der Erfindung

Zur Lösung der vorgenannten Aufgabe schlägt die Erfindung ein Verfahren zum Betrieb eines selbsttätig verfahrbaren Flächenbearbeitungsgerätes vor, bei welchem der Ultraschallsensor des Flächenbearbeitungsgerätes Glasbruchgeräusche detektiert, wobei Frequenzen von mittels des Ultraschallsensors detektiertem Schall mit bei einem Glasbruch typischerweise auftretenden Referenzfrequenzen verglichen werden und wobei im Falle einer Übereinstimmung ein Glasbruch, insbesondere ein Einbruch durch eine Glasscheibe eines Fensters oder einer Tür, festgestellt wird.

Gemäß der Erfindung, die in den unabhängigen Ansprüchen 1,10 und 11 definiert ist, werden die Ultraschallsensoren des Flächenbearbeitungsgerätes somit nicht nur zur Detektion von Hindernissen in dem Raum verwendet, sondern vielmehr auch zur Überwachung des Raumes in Bezug auf einen Einbruch durch eine Glasscheibe, beispielsweise eines Fensters oder einer Tür. Dabei liegt die Erkenntnis zugrunde, dass Glasbruchgeräusche charakteristische Frequenzen aufweisen.

Der Ultraschallsensor des Flächenbearbeitungsgerätes kann den Raum bzw. die Wohnung somit nicht nur auf Hindernisse, wie beispielsweise Wände, Möbelstücke und dergleichen überwachen, sondern vielmehr auch als Einbruchsensor dienen. Vorteilhaft ist dabei gegenüber dem Stand der Technik, dass das Flächenbearbeitungsgerät zur Überwachung des Raumes nicht mehr auf die Erstellung einer Karte des Raumes angewiesen ist und somit nicht mehr in den betreffenden Raum hineinfahren muss. Vielmehr kann das Flächenbearbeitungsgerät an einem beliebigen Standort verbleiben und von dort aus Glasbruchgeräusche detektieren, da die Ultraschallsensoren üblicherweise eine Detektionsreichweite von mehreren Metern aufweisen. Das Flächenbearbeitungsgerät kann entweder einen oder mehrere Ultraschallsensoren aufweisen. Die Ultraschallsensoren weisen ein Mikrofon auf, welches charakteristische Frequenzen eines Glasbruchs detektieren kann. Insofern dienen diese als akustische Glasbruchmelder. In der Regel entstehen bei einem Einbruch charakteristische Frequenzen beim Einschlagen der Glasscheibe und anschließend charakteristische Frequenzen beim Zersplittern der Glasscheibe und Auftreffen der Scherben auf einer Fläche. Diese Frequenzen, welche typisch für Flächengläser von Fenstern und/oder Türen sind, unterscheiden sich von Frequenzen, welche beispielsweise bei einem Zerbrechen von Trinkgläsern auftreten.

Es wird vorgeschlagen, dass als Referenzfrequenzen Frequenzen zwischen 1 kHz und 1 MHz herangezogen werden. Die bei einem Glasbruch von Fenstern und/oder Türen auftretenden Frequenzen befinden sich üblicherweise in einem Frequenzbereich von 1 kHz bis 1 MHz. Darüber hinaus weisen Glasbruchfrequenzen im Bereich von kleiner als 20 kHz eine große Amplitude auf. Die Frequenz von 20 kHz befindet sich gerade noch im hörbaren Frequenzspektrum des Menschen. Die Frequenzen zwischen 20 kHz (insbesondere 100 kHz) und 1 MHz sind hingegen nicht mehr vom menschlichen Gehör wahrnehmbar. Dieser Frequenzbereich ist mit handelsüblichen Ultraschallsensoren abdeckbar, so dass das Flächenbearbeitungsgerät kostengünstig hergestellt werden kann.

Des Weiteren ist vorgesehen, dass der detektierte Schall hinsichtlich einer zeitlichen Veränderung, insbesondere einer zeitlichen Veränderung frequenzabhängiger Amplituden, ausgewertet wird. Die bei einem Glasbruch emittierten Schallwellen unterliegen einer zeitlichen Variation, wobei im Moment des Einschlagens einer Glasscheibe zunächst eine messbare Amplitude bei tiefen Frequenzen im Bereich von kleiner als 100 kHz, insbesondere kleiner als 20 kHz, auftritt, während beim anschließenden Zersplittern des Glases vermehrt Schall bei demgegenüber höheren Frequenzen, im Bereich von beispielsweise 1 MHz emittiert wird. Dadurch entsteht eine typische zeitliche Variation des Frequenzspektrums, welche durch einen Amplitudenpeak während des Glasbruches bei einer ersten Frequenz mit einem zeitlich darauffolgenden Amplitudenpeak bei einer demgegenüber höheren zweiten Frequenz charakterisiert ist. Wenn ein aktuell gemessenes Signal mit den Referenzspektren typischer Glasbruchsituationen einer Glasscheibe übereinstimmt, wird ein Glasbruch an einem Flächenglas, beispielsweise das einer Tür oder eines Fensters, festgestellt. Somit ist gewährleistet, dass keine alltäglichen Klirrgeräusche, wie beispielsweise das Zersplittern von Trinkgläsern, als Einbruch detektiert werden und insbesondere einen Alarm auslösen.

Insbesondere wird somit also vorgeschlagen, dass bezogen auf das Frequenzspektrum des detektierten Schalls im Falle eines plötzlichen Amplitudenanstiegs bei einer ersten Frequenz und eines anschließenden Amplitudenanstiegs bei einer zweiten Frequenz, welche größer ist als die erste Frequenz, auf einen Glasbruch geschlossen wird. Die zeitliche Aufeinanderfolge des Auftretens der beiden Amplitudenanstiege beträgt dabei wenige Millisekunden bis hin zu einer Sekunde, je nach Festigkeit und Fallhöhe des Glases.

Es wird vorgeschlagen, dass das Flächenbearbeitungsgerät bei Feststellung eines Glasbruches den aktuellen Zustand des Raumes mit dem Zustand des Raumes gemäß einer gespeicherten Raumkarte vergleicht, wobei das Flächenbearbeitungsgerät in dem Raum, insbesondere im Bereich eines Fensters oder einer Tür, verfahren kann. Zusätzlich zu der Detektion eines Glasbruches anhand der bei einem Glasbruch auftretenden Frequenzen, insbesondere frequenzabhängiger Amplituden, wird ein festgestellter Glasbruch zusätzlich durch den Vergleich eines aktuellen Zustandes des Raumes mit der gespeicherten Raumkarte verifiziert. Dabei werden Abweichungen zu der gespeicherten Raumkarte detektiert, wie beispielsweise eine offenstehende Tür, ein offenstehendes Fenster, eine fehlende Glasscheibe, Glasscherben auf einer zu bearbeitenden Fläche, Bewegungen einer Person in dem Raum usw. Zur Detektion des aktuellen Zustands des Raumes kann das Flächenbearbeitungsgerät gegebenenfalls aus einer Ruheposition heraus umherfahren, um in dem betreffenden Raum den aktuellen Zustand festzustellen. Durch die Verifizierung des Detektionsergebnisses des Ultraschallsensors mittels eines Zustandsvergleichs des Raumes anhand einer Raumkarte lässt sich die Zuverlässigkeit des Detektionsergebnisses steigern.

Des Weiteren wird vorgeschlagen, dass der Zustand des Raumes, insbesondere ein Öffnungszustand eines Fensters und/oder einer Tür, mittels einer Messeinrichtung zur Detektion von Merkmalen eines Raumes festgestellt wird. Diese Messeinrichtung ist vorteilhaft ein Sensor, welcher üblicherweise zur Erstellung einer Raumkarte verwendet wird. Dies kann ein Laserscanner sein, vorteilhaft in der Form eines Triangulationssensors. Insbesondere bietet sich eine Messeinrichtung an, welche einen Detektionsbereich von 360 Grad rund um das Flächenbearbeitungsgerät aufweist. Somit kann eine bereits üblicherweise an einem selbsttätig verfahrbaren Flächenbearbeitungsgerät angeordnete Messeinrichtung zur Verifizierung des Messergebnisses des Ultraschallsensors genutzt werden. Auch dadurch werden die Herstellungskosten des Flächenbearbeitungsgerätes nicht erhöht.

Es wird des Weiteren vorgeschlagen, dass im Falle eines festgestellten Glasbruches, insbesondere eines Einbruchs durch eine Glasscheibe eines Fensters oder einer Tür, ein Alarmsignal ausgegeben wird. Das Alarmsignal dient zur Information eines Bewohners, einer Notrufstelle o.ä. über den Einbruch. Zusätzlich kann dadurch gegebenenfalls der Einbrecher abgeschreckt werden und zum Verlassen der Wohnung veranlasst werden. Vorteilhaft kann das Flächenbearbeitungsgerät dabei kommunikationstechnisch mit einer externen Alarmanlage verbunden sein, so dass das Alarmsignal mittels der Alarmanlage an die Notrufstelle weitergeleitet wird.

Vorzugsweise wird der von dem Ultraschallsensor empfangene Schall mittels einer Hausalarmanlage, in welche das Flächenbearbeitungsgerät kommunikationstechnisch integriert ist, ausgewertet und/oder im Falle eines festgestellten Glasbruches ein Alarmsignal von der Hausalarmanlage ausgegeben und/oder veranlasst. Die Auswertung des von dem Ultraschallsensor empfangenen Schalls kann somit nicht mittels einer Einrichtung des Flächenbearbeitungsgerätes selbst, sondern vielmehr mittels einer Hausalarmanlage, in welche das Flächenbearbeitungsgerät integriert ist, erfolgen. Das Flächenbearbeitungsgerät muss somit nur den Ultraschallsensor aufweisen, während die Auswerteeinrichtung der Hausalarmanlage genutzt wird. Dabei können insbesondere auch die zur Auswertung verwendeten typischerweise bei einem Glasbruch auftretenden Referenzfrequenzen in einem Datenspeicher der Hausalarmanlage hinterlegt sein. Der apparative Aufwand für die Detektion eines Einbruchs wird somit auf die Hausalarmanlage verlagert, während das Flächenbearbeitungsgerät nur den Ultraschallsensor und eine entsprechende Kommunikationseinrichtung zur Kommunikation mit der Hausalarmanlage aufweisen muss. Darüber hinaus wird vorteilhaft auch das Alarmsignal von der Hausalarmanlage abgegeben und/oder veranlasst. Sofern die Auswerteeinrichtung der Hausalarmanlage, oder alternativ auch die Auswerteeinrichtung des Flächenbearbeitungsgerätes (wie zuvor dargestellt), einen Einbruch feststellt, emittiert die Hausalarmanlage das Alarmsignal. Vorteilhaft wird das Alarmsignal dann an eine entsprechende Notrufstelle (einen Wachdienst, Hausmeister, Pförtner o.ä.) weitergeleitet. Vorteilhaft ist das Flächenbearbeitungsgerät zur Kommunikation mit der Hausalarmanlage mittels einer Funkverbindung, beispielsweise GSM, Bluetooth und dergleichen verbunden. Darüber hinaus kann mittels dieser Funkverbindung ebenfalls ein Mobilfunkgerät des Nutzers kontaktiert werden. Insgesamt ist das Flächenbearbeitungsgerät somit in eine komplexe Hausautomatisierungseinrichtung integrierbar, welche neben einer Hausalarmanlage auch noch weitere Einrichtungen wie beispielsweise einen Rauchmelder, einen Temperatursensor, eine Schließeinrichtung oder ähnliches beinhalten kann. Ebenso kann anstatt einer ortsfest installierten Hausalarmanlage auch ein mobiles Kommunikationsgerät, beispielweise ein Handy, Laptop, Tablet oder ähnliches zur Auswertung und/oder Abgabe eines Alarmsignals verwendet werden.

Darüber hinaus wird vorgeschlagen, dass der von dem Ultraschallsensor empfangene Schall nur dann in Bezug auf Glasbruchgeräusche ausgewertet wird, wenn sich der Ultraschallsensor in einem ausschließlichen Empfangsbetrieb befindet, insbesondere während eines Ruhezustandes des Flächenbearbeitungsgerätes. Während des ausschließlichen Empfangsbetriebs sendet der Ultraschallsensor selbst kein Ultraschallsignal aus. Somit unterscheidet sich der ausschließliche Empfangsbetrieb von dem Messbetrieb zur Detektion von Hindernissen in dem Raum. Vorteilhaft steht das Flächenbearbeitungsgerät während des Ruhezustands in einer Basisstation, die beispielsweise zum Laden eines Akkumulators des Flächenbearbeitungsgerätes dient. Dadurch, dass das Flächenbearbeitungsgerät während der Detektion der Glasbruchgeräusche ruht, beinhalten die Umgebungsgeräusche keine Bearbeitungsgeräusche, die beispielsweise durch eine Reinigungstätigkeit oder Fortbewegung des Flächenbearbeitungsgerätes entstehen, so dass der Ultraschallsensor Glasbruchgeräusche besonders einfach erkennen kann.

Neben dem zuvor erläuterten Verfahren wird mit der Erfindung auch ein selbsttätig verfahrbares Flächenbearbeitungsgerät, insbesondere ein Saug- und/oder Wischroboter, mit einem Ultraschallsensor vorgeschlagen, welches eine Auswerteeinrichtung aufweist, die ausgebildet ist, Frequenzen von mittels des Ultraschallsensors detektiertem Schall mit bei einem Glasbruch typischerweise auftretenden Referenzfrequenzen zu vergleichen und im Falle einer Übereinstimmung einen Glasbruch, insbesondere einen Einbruch durch eine Glasscheibe eines Fensters oder einer Tür, festzustellen.

Darüber hinaus wird auch ein System aus einem selbsttätig verfahrbaren Flächenbearbeitungsgerät, aufweisend einen Ultraschallsensor, insbesondere einem Saug- und/oder Wischroboter, und einer Hausalarmanlage, in welche das Flächenbearbeitungsgerät kommunikationstechnisch integriert ist, vorgeschlagen, wobei die Hausalarmanlage eine Auswerteeinrichtung aufweist, welche ausgebildet ist, Frequenzen von mittels des Ultraschallsensors detektiertem Schall mit bei einem Glasbruch typischerweise auftretenden Referenzfrequenzen zu vergleichen, und im Falle einer Übereinstimmung einen Glasbruch, insbesondere einen Einbruch durch eine Glasscheibe eines Fensters oder einer Tür, festzustellen.

Die in Bezug auf das erfindungsgemäße Verfahren erläuterten Merkmale und Vorteile ergeben sich entsprechend auch in Bezug auf das selbsttätig verfahrbare Flächenbearbeitungsgerät bzw. das System aus einem Flächenbearbeitungsgerät und einer Hausalarmanlage.

### Kurze Beschreibung der Zeichnungen

Im Folgenden wird die Erfindung anhand von Ausführungsbeispielen näher erläutert. Es zeigen:
- Fig. 1: ein erfindungsgemäßes Flächenbearbeitungsgerät in einem überwachten Raum,
- Fig. 2: eine Einbruchsituation in dem Raum gemäß Figur 1,
- Fig. 3: eine Raumkarte einer Wohnung mit mehreren Räumen,
- Fig. 4: das Flächenbearbeitungsgerät mit einer Auswerteeinrichtung.

### Beschreibung der Ausführungsformen

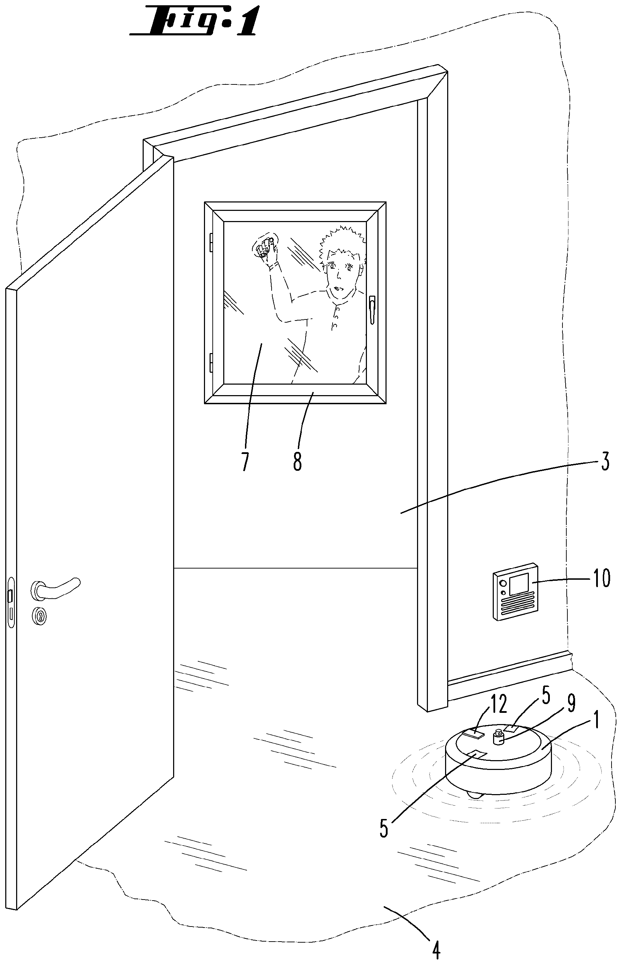

Figur 1 zeigt einen Teil einer Wohnung mit mehreren Räumen 3, 4, welche Fenster 8 mit Glasscheiben 7 aufweisen. In einem der Räume 4 befindet sich ein Flächenbearbeitungsgerät 1, welches hier als selbsttätig verfahrbarer Saugroboter ausgebildet ist. Das Flächenbearbeitungsgerät 1 steht in Kommunikationsverbindung mit einer Hausalarmanlage 10, welche in dem Raum 4 ortsfest angeordnet ist. Das Flächenbearbeitungsgerät 1 verfügt über zwei Ultraschallsensoren 5 zur Detektion von Hindernissen 6, wie beispielsweise Wänden, Möbelstücken und dergleichen, sowie über eine Messeinrichtung 9 zur Detektion von Merkmalen eines Raumes 3, 4, beispielsweise zur Orientierung des Flächenbearbeitungsgerätes 1 in den Räumen 3, 4 sowie zur Erstellung einer Raumkarte 2. Die Messeinrichtung 9 ist hier als Laserscanner ausgebildet, welcher in einem 360 Grad-Winkelbereich um das Flächenbearbeitungsgerät 1 messen kann. Darüber hinaus weist das Flächenbearbeitungsgerät 1 eine Auswerteeinrichtung 12 auf, mit deren Hilfe die von den Ultraschallsensoren 5 sowie der Messeinrichtung 9 detektierten Signale ausgewertet werden können. Die Auswerteeinrichtung 12 weist vorteilhaft auch einen Datenspeicher zur Speicherung von Messsignalen und Referenzdaten auf.

Wie in Figur 1 dargestellt befindet sich eine Person vor dem Fenster 8 des Raumes 3. Die Person beabsichtigt unberechtigt durch das Fenster 8 von außen in den Raum 3 einzudringen.

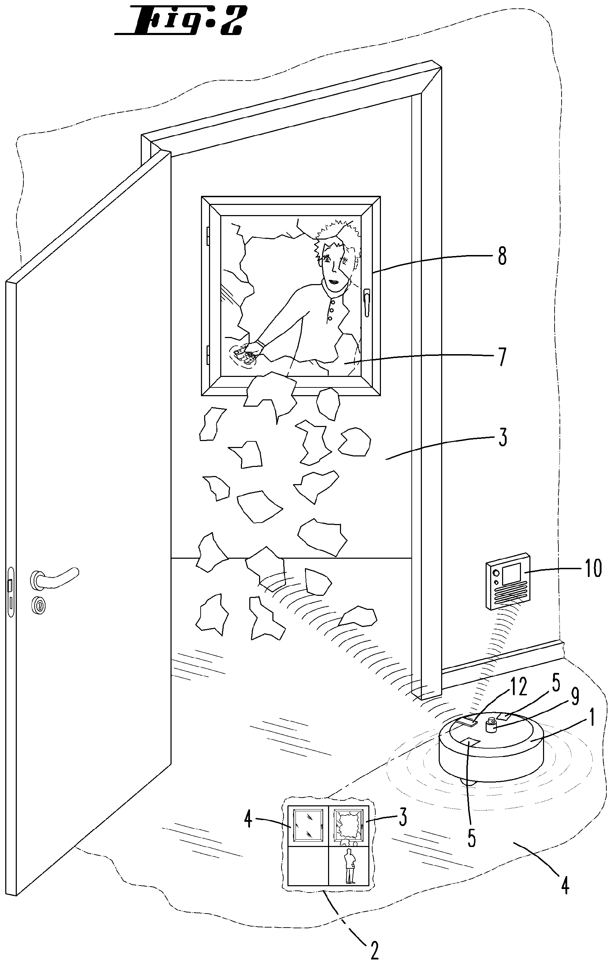

Figur 2 zeigt die überwachten Räume 3, 4 in einer zeitlich späteren Situation. Zu diesem Zeitpunkt hat die Person die Glasscheibe 7 des Fensters 8 bereits eingeschlagen. Durch das Einschlagen der Glasscheibe 7 entsteht Schall (sowohl Ultraschall als auch hörbarer Schall) mit einem charakteristischen Frequenzspektrum. Das Ultraschallspektrum weist insbesondere bei tiefen Frequenzen unter 100 kHz, insbesondere auch unter 20 kHz, eine große Amplitude beim Einschlagen der Glasscheibe 7 auf. Da die Ultraschallsensoren 5 die Umgebungsgeräusche kontinuierlich detektieren, kann im zeitlichen Verlauf ein plötzlicher Anstieg der Amplitude bei einer bestimmten Frequenz gemessen werden, beispielsweise im Bereich unter 100 kHz/unter 20 kHz (je nach Größe, Stärke und Material der Glasscheibe. Durch das anschließende Zersplittern der Glasscheibe 7 und Auftreffen der Scherben der Glasscheibe 7 auf den Boden steigt die Amplitude einer anderen, höheren Frequenz (insbesondere einer Frequenz über 100 kHz bzw. 20 kHz) an, während die durch das Einschlagen der Glasscheibe 7 hervorgerufene Amplitude reduziert wird. Diese zeitliche Veränderung des von den Ultraschallsensoren 5 detektierten Schalls wird mittels der Auswerteeinrichtung 12 des Flächenbearbeitungsgerätes 1 ausgewertet. Dabei werden die Frequenzen des Schalls mit bei einem Glasbruch typischerweise auftretenden Referenzfrequenzen verglichen, welche in einem Datenspeicher der Auswerteeinrichtung 12 hinterlegt sind. Im Falle einer Übereinstimmung zwischen dem gemessenen Frequenzspektrum und einem Referenzspektrum wird eine Zerstörung der Glasscheibe 7 festgestellt, so dass das Flächenbearbeitungsgerät 1 darauf schließt, dass sich eine Person unberechtigten Zutritt zu den Räumen 3, 4 verschaffen will oder verschafft hat. Daraufhin kann das Flächenbearbeitungsgerät 1 unmittelbar eine Information an die Hausalarmanlage 10 senden, welche daraufhin einen akustischen Alarm ausgibt und/oder eine Notrufzentrale, beispielsweise einen Wachdienst, verständigt. Darüber hinaus kann das Flächenbearbeitungsgerät 1 zusätzlich den aktuellen Zustand des Raumes 3, 4 mit dem Zustand des Raumes 3, 4 gemäß einer gespeicherten Raumkarte 2 der Räume 3, 4 vergleichen. Dabei fährt das Flächenbearbeitungsgerät 1 in den Räumen 3, 4 im Bereich der Fenster 8 entlang, um mittels der Messeinrichtung 9 ein Fehlen von Glasscheiben 7 eines Fensters 8 und/oder auf dem Boden liegende Glasscherben der Glasscheibe 7 zu messen. Sobald auch die Messeinrichtung 9 ein Fehlen der Glasscheibe 7 in dem Raum 3 detektiert, wird ein entsprechendes Signal an die Auswerteeinrichtung 12 übermittelt, welche die Messsignale der Messeinrichtung 9 mit den Messsignalen der Ultraschallsensoren 5 kombiniert und den Einbruchsversuch/Einbruch verifiziert. Zusätzlich kann gegebenenfalls die Bewegung einer Person durch den Raum 3, 4 mittels der Messeinrichtung 9 festgestellt werden. Dazu kann das Flächenbearbeitungsgerät 1 ebenfalls innerhalb der Räume 3, 4 verfahren und die Person dem jeweiligen Raum 3, 4 zuordnen. Neben einer Übermittlung des Einbruchs/Einbruchs-versuchs an die Hausalarmanlage 10 kann das Flächenbearbeitungsgerät 1 die Information ebenfalls an ein Mobilfunkgerät des Bewohners übermitteln, so dass dieser über die aktuelle Situation in seiner Wohnung informiert wird.

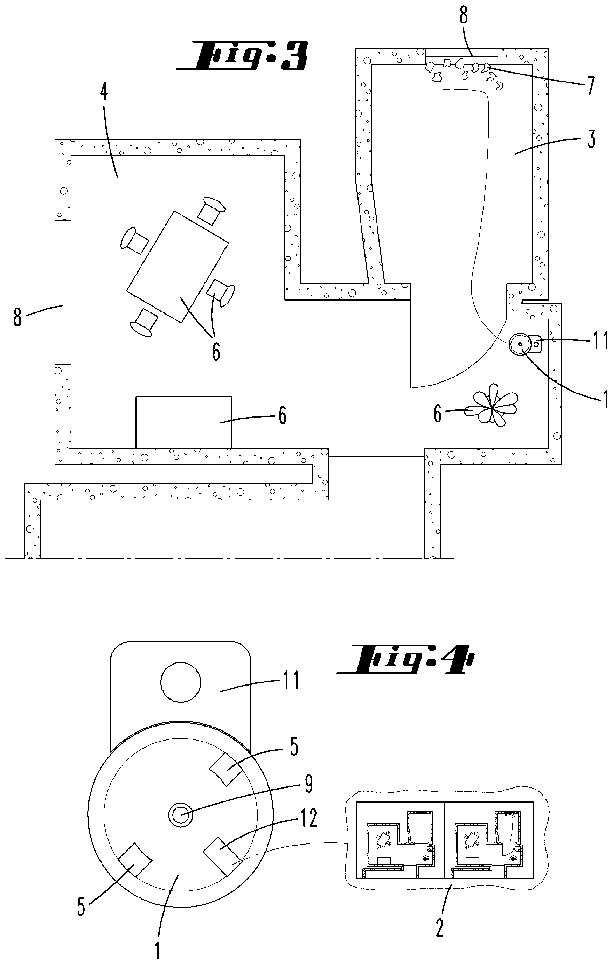

Figur 3 zeigt die Raumsituation in der Wohnung mit den Räumen 3, 4 in einer Draufsicht. Diese Darstellung entspricht einer Raumkarte 2, welche beispielsweise mittels der Messeinrichtung 9 des Flächenbearbeitungsgerätes 1 erstellt wurde. Das Flächenbearbeitungsgerät 1 befindet sich in einem Ruhezustand in einer Basisstation 11, welche in dem Raum 4 angeordnet ist. In dem Raum 4 sind des Weiteren mehrere Hindernisse 6 angeordnet, hier beispielsweise eine Pflanze, ein Schrank, ein Tisch sowie vier Stühle. Sowohl der Raum 4 als auch der benachbarte Raum 3 weisen jeweils ein Fenster 8 mit einer Glasscheibe 7 auf. Vor dem Fenster 8 des Raumes 3 befinden sich die durch den Einbruch verursachten Scherben. Nachdem die Ultraschallsensoren 5 des Flächenbearbeitungsgerätes 1 die Glasbruchgeräusche detektiert und erkannt haben, verlässt das Flächenbearbeitungsgerät 1 den Ruhezustand und fährt entlang der dargestellten Route durch den Raum 3 insbesondere in den Bereich des Fensters 8, um dort mittels der Messeinrichtung 9 ein Fehlen der Glasscheibe 7 bzw. eine Anwesenheit von Glasscherben auf dem Boden zu detektieren.

Figur 4 zeigt eine Draufsicht auf das Flächenbearbeitungsgerät 1, wobei in Bezug auf die Auswerteeinrichtung 12 schematisch ein Vergleich zwischen einer in der Auswerteeinrichtung 12 gespeicherten Raumkarte 2 der Räume 3, 4 (links) und der aktuellen Situation der Räume 3, 4 (rechts) dargestellt ist. Anhand des skizzenhaft dargestellten Vergleichs zwischen der Raumkarte 2 und der aktuellen Situation der Räume 3, 4 verifiziert die Auswerteeinrichtung 12 die Zerstörung der Glasscheibe 7 des Fensters 8 innerhalb des Raumes 3 und damit einen Einbruch/ Einbruchsversuch. Das Flächenbearbeitungsgerät 1 sendet anschließend ein Signal an die Hausalarmanlage 10, welche daraufhin selbst ein Alarmsignal abgibt und/oder die Information an eine Notrufstelle sendet.

### Liste der Bezugszeichen

- 1: Flächenbearbeitungsgerät
- 2: Raumkarte
- 3: Raum
- 4: Raum
- 5: Ultraschallsensor
- 6: Hindernis
- 7: Glasscheibe
- 8: Fenster
- 9: Messeinrichtung
- 10: Hausalarmanlage
- 11: Basisstation
- 12: Auswerteeinrichtung

## Patentansprüche

1. Verfahren zum Betrieb eines selbsttätig verfahrbaren Flächenbearbeitungsgerätes (1), insbesondere Saug- und/oder Wischroboter, wobei das Flächenbearbeitungsgerät (1) in einem Raum (3, 4) verfahren kann und hierbei gegebenenfalls Flächenbearbeitungsaufgaben ausführt, und wobei das Flächenbearbeitungsgerät einen Ultraschallsensor aufweist, wobei der Ultraschallsensor (5) an Hindernissen (6) reflektierte Ultraschallwellen detektiert, **dadurch gekennzeichnet, dass** der Ultraschallsensor (5) Glasbruchgeräusche detektiert, wobei Frequenzen von mittels des Ultraschallsensors (5) detektiertem Schall mit bei einem Glasbruch typischerweise auftretenden Referenzfrequenzen verglichen werden und wobei im Falle einer Übereinstimmung ein Glasbruch, insbesondere ein Einbruch durch eine Glasscheibe (7) eines Fensters (8) oder einer Tür, festgestellt wird.

2. Verfahren nach Anspruch 1, **dadurch gekennzeichnet, dass** als Referenzfrequenzen Frequenzen zwischen 1 kHz und 1 MHz herangezogen werden.

3. Verfahren nach Anspruch 1 oder 2, **dadurch gekennzeichnet, dass** der detektierte Schall hinsichtlich einer zeitlichen Veränderung, insbesondere einer zeitlichen Veränderung frequenzabhängiger Amplituden, ausgewertet wird.

4. Verfahren nach einem der vorhergehenden Ansprüche, **dadurch gekennzeichnet, dass** bezogen auf das Frequenzspektrum des detektierten Schalls im Falle eines plötzlichen Amplitudenanstiegs bei einer ersten Frequenz und eines anschließenden Amplitudenanstiegs bei einer zweiten Frequenz, welche größer ist als die erste Frequenz, auf einen Glasbruch geschlossen wird.

5. Verfahren nach einem der vorhergehenden Ansprüche, **dadurch gekennzeichnet, dass** das Flächenbearbeitungsgerät (1) bei Feststellung eines Glasbruches den aktuellen Zustand des Raumes (3, 4) mit dem Zustand des Raumes (3, 4) gemäß einer gespeicherten Raumkarte (2) vergleicht, wobei das Flächenbearbeitungsgerät (1) in dem Raum (3, 4), insbesondere im Bereich eines Fensters (8) öder einer Tür, verfahren kann.

6. Verfahren nach Anspruch 5, **dadurch gekennzeichnet, dass** der Zustand des Raumes (3, 4), insbesondere ein Öffnungszustand eines Fensters (8) und/oder einer Tür, mittels einer Messeinrichtung (9) zur Detektion von Merkmalen eines Raumes (3, 4) festgestellt wird.

7. Verfahren nach einem der vorhergehenden Ansprüche, **dadurch gekennzeichnet, dass** im Falle eines festgestellten Glasbruches, insbesondere eines Einbruchs durch eine Glasscheibe eines Fensters (8) oder einer Tür, ein Alarmsignal ausgegeben wird.

8. Verfahren nach einem der vorhergehenden Ansprüche, **dadurch gekennzeichnet, dass** der von dem Ultraschallsensor (5) empfangene Schall mittels einer Hausalarmanlage (10), in welche das Flächenbearbeitungsgerät (1) kommunikationstechnisch integriert ist, ausgewertet wird und/oder dass im Falle eines festgestellten Glasbruches ein Alarmsignal von der Hausalarmanlage (10) ausgegeben und/ oder veranlasst wird.

9. Verfahren nach einem der vorhergehenden Ansprüche, **dadurch gekennzeichnet, dass** der von dem Ultraschallsensor (5) empfangene Schall nur dann in Bezug auf Glasbruchgeräusche ausgewertet wird, wenn sich der Ultraschallsensor (5) in einem ausschließlichen Empfangsbetrieb befindet, insbesondere während eines Ruhezustandes des Flächenbearbeitungsgerätes (1).

10. Selbsttätig verfahrbares Flächenbearbeitungsgerät (1), insbesondere Saug- und/oder Wischroboter, mit einem Ultraschallsensor (5) zur Detektion von an Hindernissen reflektierten Ultraschallwellen, **dadurch gekennzeichnet, dass** das Flächenbearbeitungsgerät (1) eine Auswerteeinrichtung (12) aufweist, welche ausgebildet ist, Frequenzen von mittels des Ultraschallsensors (5) detektiertem Schall mit bei einem Glasbruch typischerweise auftretenden Referenzfrequenzen zu vergleichen und im Falle einer Übereinstimmung einen Glasbruch, insbesondere einen Einbruch durch eine Glasscheibe eines Fensters (8) oder einer Tür, festzustellen.

11. System aus einem selbsttätig verfahrbaren Flächenbearbeitungsgerät (1), insbesondere Saug- und/ oder Wischroboter, aufweisend einen Ultraschallsensor (5) zur Detektion von an Hindernissen reflektierten Ultraschallwellen, und einer Hausalarmanlage (10), in welche das Flächenbearbeitungsgerät (1) kommunikationstechnisch integriert ist, **dadurch gekennzeichnet, dass** die Hausalarmanlage (10) eine Auswerteeinrichtung aufweist, welche ausgebildet ist, Frequenzen von mittels des Ultraschallsensors (5) detektiertem Schall mit bei einem Glasbruch typischerweise auftretenden Referenzfrequenzen zu vergleichen, und im Falle einer Übereinstimmung einen Glasbruch, insbesondere einen Einbruch durch eine Glasscheibe eines Fensters (8) oder einer Tür, festzustellen.

## Claims

1. A method for operating an automatically movable surface treatment device (1), in particular a robotic vacuum cleaner and/or a cleaning robot, wherein the surface treatment device (1) can move in a room (3, 4) and possibly carries out surface treatment tasks in this case, and wherein the surface treatment device shows a ultrasonic sensor, wherein the ultrasonic sensor (5) detecting ultrasonic waves reflected on obstacles (6), **characterized in that** the ultrasonic sensor (5) detects glass breakage noises, wherein frequencies of sound detected by means of the ultrasonic sensor (5) are compared with reference frequencies typically occurring in the event of a glass breakage, and wherein, in the event of a match, a glass breakage, in particular a break-in through a pane of glass (7) of a window (8) or of a door, is determined.

2. The method according to claim 1, **characterized in that** frequencies of between 1 kHz and 1 MHz are used as reference frequencies.

3. The method according to claim 1 or 2, **characterized in that** the detected sound is evaluated with regard to a time change, in particular a time change of frequency-dependent amplitudes.

4. The method according to one of the preceding claims, **characterized in that**, based on the frequency spectrum of the detected sound in the event of a sudden amplitude increase at a first frequency and of a subsequent amplitude increase at a second frequency, which is larger than the first frequency, a conclusion is drawn to a glass breakage.

5. The method according to one of the preceding claims, **characterized in that** the surface treatment device (1) compares the current state of the room (3, 4) with the state of the room (3, 4) according to a stored room map (2), when a glass breakage is determined, wherein the surface treatment device (1) can be moved in the room (3, 4), in particular in the area of a window (8) or a door.

6. The method according to claim 5, **characterized in that** the state of the room (3, 4), in particular an open state of a window (8) and/or of a door, is determined by means of a measuring device (9) for detecting features of a room (3, 4).

7. The method according to one of the preceding claims, **characterized in that** in the event a glass breakage is determined, in particular a break-in through a pane of glass of a window (8) or of a door, an alarm signal is output.

8. The method according to one of the preceding claims, **characterized in that** the sound received by the ultrasonic sensor (5) is evaluated by means of a home alarm system (10), in which the surface treatment device (1) is integrated in terms of communication, and/or that an alarm signal is output and/or prompted by the home alarm system (10) in the event a glass breakage is determined.

9. The method according to one of the preceding claims, **characterized in that** the sound, which is received by the ultrasonic sensor (5), is evaluated with regard to the glass breakage noises, only when the ultrasonic sensor (5) is in an exclusive receive mode, in particular during a rest state of the surface treatment device (1).

10. An automatically movable surface treatment device (1), in particular a vacuum cleaner and/or a cleaning robot, comprising an ultrasonic sensor (5) for the detection of ultrasonic waves reflected from obstacles, **characterized in that** the surface treatment device (1) has an evaluation device (12), which is embodied to compare frequencies of sound detected by means of the ultrasonic sensor (5) with reference frequencies typically occurring in the event of a glass breakage, and, in the event of a match, to determine a glass breakage, in particular a break-in through a pane of glass of a window (8) or of a door.

11. A system of an automatically movable surface treatment device (1), in particular a vacuum cleaner and/or a cleaning robot, having an ultrasonic sensor (5) for the detection of ultrasonic waves reflected from obstacles and a house alarm system (10), in which the surface treatment device (1) is integrated in terms of communication, **characterized in that** the home alarm system (10) has an evaluation device, which is embodied to compare frequencies of sound detected by means of the ultrasonic sensor (5) with reference frequencies typically occurring in the event of a glass breakage, and, in the event of a match, to determine a glass breakage, in particular a break-in through a pane of glass of a window (8) or of a door.

## Revendications

1. Procédé pour faire fonctionner un dispositif de traitement de surface (1) pouvant se déplacer automatiquement, en particulier un robot aspirateur et/ou essuyeur, dans lequel le dispositif de traitement de surface (1) peut se déplacer dans une pièce (3, 4) et exécute le cas échéant des tâches de traitement de surface, et dans lequel le dispositif de traitement de surfaces présente un capteur à ultrasons, le capteur à ultrasons (5) détectant des ondes ultrasonores réfléchies par des obstacles (6), **caractérisé en ce que** le capteur à ultrasons (5) détecte des bruits de bris de verre, dans lequel des fréquences du son détecté au moyen du capteur à ultrasons (5) sont comparées à des fréquences de référence se produisant typiquement en cas de bris de verre, et **en ce qu'**est constaté, en cas de concordance, un bris de verre, en particulier une effraction à travers une vitre (7) d'une fenêtre (8) ou d'une porte.

2. Procédé selon la revendication 1, **caractérisée en ce que** des fréquences comprises entre 1 kHz et 1 MHz sont utilisées comme fréquences de référence.

3. Procédé selon la revendication 1 ou 2, **caractérisé en ce que** le son détecté est évalué en fonction d'une variation dans le temps, en particulier une variation dans le temps des amplitudes dépendantes de la fréquence.

4. Procédé selon l'une des revendications précédentes, **caractérisé en ce que**, en se référant au spectre de fréquence du son détecté, il est conclu à un bris de verre en cas d'augmentation soudaine de l'amplitude à une première fréquence et d'une augmentation ultérieure de l'amplitude à une deuxième fréquence qui est supérieure à la première fréquence.

5. Procédé selon l'une des revendications précédentes, **caractérisé en ce que**, lorsqu'un bris de verre est détecté, le dispositif de traitement de surface (1) compare l'état actuel de la pièce (3, 4) avec l'état de la pièce (3, 4) selon une carte de pièce stockée (2), le dispositif de traitement de surface (1) pouvant se déplacer dans la pièce (3, 4), en particulier dans la zone d'une fenêtre (8) ou d'une porte.

6. Procédé selon la revendication 5, **caractérisé en ce que** l'état de la pièce (3, 4), en particulier l'état ouvert d'une fenêtre (8) et/ou d'une porte, est déterminé au moyen d'un dispositif de mesure (9) pour détecter des caractéristiques d'une pièce (3, 4).

7. Procédé selon l'une des revendications précédentes, **caractérisé en ce qu'**un signal d'alarme est émis en cas de détection d'un bris de glace, en particulier d'une effraction à travers une vitre d'une fenêtre (8) ou d'une porte.

8. Procédé selon l'une des revendications précédentes, **caractérisé en ce que** le son reçu par le capteur à ultrasons (5) est évalué au moyen d'un système d'alarme domestique (10) dans lequel le dispositif de traitement de surface (1) est intégré en liaison de communication et/ou qu'un signal d'alarme est émis et/ou déclenché par le système d'alarme domestique (10) en cas de détection d'un bris de verre.

9. Procédé selon l'une des revendications précédentes, **caractérisé en ce que** le son reçu par le capteur à ultrasons (5) n'est évalué en ce qui concerne les bruits de bris de verre que lorsque le capteur à ultrasons (5) se trouve dans un mode de réception exclusif, en particulier pendant un état de repos du dispositif de traitement de surface (1).

10. Dispositif de traitement de surface (1) pouvant se déplacer automatiquement, en particulier robot aspirateur et/ou essuyeur, avec un capteur à ultrasons (5) pour la détection d'ondes ultrasonores réfléchies par des obstacles, **caractérisé en ce que** le dispositif de traitement de surface (1) présente un dispositif d'évaluation (12) qui est conçu pour comparer les fréquences du son détecté au moyen du capteur à ultrasons (5) avec des fréquences de référence apparaissant typiquement en cas de bris de verre et, en cas de concordance, pour constater un bris de verre, en particulier une effraction à travers une vitre d'une fenêtre (8) ou d'une porte.

11. Système comprenant un dispositif de traitement de surface (1) pouvant se déplacer automatiquement, en particulier un robot aspirateur et/ou essuyeur, avec un capteur d'ultrasons (5) pour la détection d'ondes ultrasonores réfléchies sur des obstacles, et un système d'alarme domestique (10) dans lequel le dispositif de traitement de surface (1) est intégré en liaison de communication, **caractérisé en ce que** le système d'alarme domestique (10) comporte un dispositif d'évaluation qui est conçu pour comparer les fréquences du son détecté au moyen du capteur à ultrasons (5) avec des fréquences de référence se produisant typiquement en cas de bris de glace, et en cas de concordance, pour constater un bris de glace, en particulier une effraction à travers une vitre d'une fenêtre (8) ou d'une porte.
